# DEMANDE DE BREVET EUROPEEN

(11) **EP 0 844 403 A1**
(43) Date de publication de la demande: **27.05.1998**
(21) Numéro de dépôt: 97402844.1
(22) Date de dépôt: 26.11.1997
(51) Int. Cl.: F16B 13/14

(54) **Dispositif de support d'une structure par une paroi de béton**

(30) Priorité: 26.11.1996 FR 9614460
(71) Demandeur: Entreprise Quillery & Cie, 94100 Saint Maur des Fosses (DE)
(72) Inventeur: Carmes, Jacques, 06300 Nice (FR)
(74) Mandataire: Picard, Jean-Claude Georges

(57) **Abrégé**

Ce dispositif est caractérisé en ce qu'il comprend des fiches préfabriquées 4 comportant d'une part un corps 4a engagé avec ajustement étroit dans un logement calibré 3 de forme complémentaire exécuté dans ladite paroi 1 à l'emplacement de fixation voulu, et d'autre part une tête 4b propre à venir alors en saillie et en contact, substantiellement par toute sa surface 4c, sur la surface la de ladite paroi 1, cette tête 4b servant d'appui à ladite structure 2.

Application à la fabrication des tunnels.

## Description

La présente invention concerne un dispositif de support d'une structure par une paroi de béton. La paroi de béton peut être formée par exemple par un voussoir de tunnel constitué d'anneaux successifs, à épaisseur constante ou variable, comportant chacun un certain nombre de voussoirs, et la structure être formée par une ou plusieurs dalles de plancher supportant une chaussée. Ces dispositifs doivent généralement respecter des spécifications techniques sévères quant à leur résistance vis-à-vis de charges appliquées importantes, aux charges dynamiques et vibrations, ou encore quant à leur tenue au feu, à leur sécurité et à leur durabilité ou vis-à-vis des tolérances de nivellement des planchers.

Selon une technique connue, on exécute in situ sur la surface intérieure des voussoirs d'un tunnel des réservations destinées à recevoir des corbeaux préfabriqués de support de la structure, fixés aux voussoirs par boulonnage. Cela pose à terme le problème de la corrosion des boulons. Il y a en outre des problèmes de comportement de ces corbeaux sous effort dynamique.

Selon une autre technique, on procède par scellement des appuis dans la paroi du tunnel, constitué d'anneaux universels, mais les opérations sont longues à cause des délais de scellement et nécessitent la mise en place d'un frettage complémentaire en surface de voussoir, outre que les scellements risquent de rencontrer les armatures du voussoir. La durabilité est plus incertaine, et le problème de la tenue de ces dispositifs vis-à-vis des vibrations est là encore assez critique.

Selon encore une autre technique, on met en oeuvre des voussoirs préfabriqués à corbeaux incorporés, ce qui ne complique pas la préfabrication et permet d'atteindre parfaitement les objectifs de sécurité et de durabilité de l'ouvrage, en particulier dans le cas de tunnels routiers. Par contre, une difficulté se présente lorsque l'on utilise en alternance des anneaux droits et pincés, et le réglage en roulis du revêtement du tunnel doit se faire avec une tolérance minime (0,5°). Se posent en outre des problèmes importants de calage et d'organisation du stockage, et le rattrapage des courbes du tunnel est finalement plus compliqué.

Une autre technique met en oeuvre des goujons de liaison entre une paroi de tunnel constituée d'anneaux de voussoirs universels, et les extrémités de la dalle de plancher, avec un vide entre le nez de la dalle et son support, qui doit être comblé après mise en tension par un matériau de remplissage. La mise en oeuvre par carottage est assez simple, et il n'y a pas de problème de tolérance, mais cette technique nécessite elle aussi la mise en place d'un frettage complémentaire en surface de voussoir, et le risque se présente là encore de rencontre du scellement avec les armatures du voussoir. Il y a en outre de graves problèmes de maintenance, ainsi que de tenue vis-à-vis des efforts dynamiques vibratoires ou en cas de forte flexion.

On connaît aussi l'utilisation de voussoirs universels comportant sur leur intrados des alvéoles régulièrement répartis, dont certains peuvent alors être utilisés pour recevoir les extrémités de planchers ou autres structures. Dans ce cas se pose cependant le problème de l'accrochage du plancher supérieur, qui est difficile du fait de l'inclinaison importante de la paroi, et il y a aussi l'inconvénient d'une surconsommation pour la ventilation.

Une autre solution encore consiste, dans le cas d'un tunnel à section droite circulaire à plusieurs planchers superposés, à établir un plancher inférieur autobloquant, sur les extrémités duquel le plancher supérieur diamétral peut reposer par l'intermédiaire de poteaux en piedroit. Les inconvénients résident ici dans la nécessité d'un surdiamètre pour préserver la visibilité, et dans le création d'un effet de paroi. En outre, le problème reste entier pour ce qui est de la fixation d'un troisième plancher au-dessus du plancher diamétral, et il apparaît dans la partie inférieure de l'anneau des efforts de type buton.

On connaît encore la technique des voussoirs universels à encoches pour corbeaux préfabriqués, qui a l'avantage de permettre l'ancrage de trois dalles superposées avec une bonne précision du positionnement, mais la pose des corbeaux nécessite un chantier important, et l'accrochage peut devoir être assuré à la jonction entre deux voussoirs. De plus, il est nécessaire d'effectuer le remplissage des encoches de corbeaux non utilisées pour l'obtention d'une paroi lisse.

Le but de la présente invention est d'éliminer tous ces inconvénients des techniques antérieures en permettant la mise en oeuvre de voussoirs universels, autorisant le rattrapage des courbes sans complication, et en permettant la pose rapide et sûre de plusieurs planchers dans tous types de tunnels, avec atelier et outillages réduits. Il convient bien entendu également d'obtenir une bonne durabilité, une bonne résistance vis-à-vis des efforts statiques et dynamiques appliqués et enfin une bonne résistance au feu, en évitant la présence de pièces métalliques non protégées.

A cet effet, un dispositif de support d'une structure par une paroi de béton conforme à la présente invention est caractérisé en ce qu'il comprend des fiches préfabriquées comportant d'une part un corps engagé avec ajustement étroit dans un logement calibré de forme complémentaire exécuté dans ladite paroi à l'emplacement de fixation voulu, et d'autre part une tête propre à venir alors en saillie et en contact, substantiellement par toute sa surface, sur la surface de ladite paroi, cette tête servant d'appui à ladite structure.

En principe, chaque fiche sera scellée dans son logement, par exemple grâce à une résine, un ciment ou produit composite. De préférence, le corps des fiches aura une section droite constante, par exemple cylindrique.

De préférence encore, les fiches seront en béton armé, leur corps pouvant être entouré par un tube d'acier. Il reste cependant envisageable que ces fiches soient réalisées par usinage d'acier moulé ou de fonte.

Selon une autre disposition avantageuse de l'invention, le corps desdites fiches est traversé sur toute sa longueur par au moins un passage d'évent formant dispositif anti-pistonnement lors de sa mise en place et de préférence aussi par au moins un passage d'injection d'un produit de scellement derrière l'extrémité de ce corps.

Encore une autre disposition avantageuse de l'invention consiste à prévoir que, de l'extérieur vers l'intérieur de ladite paroi, lesdits logements des fiches sont inclinés vers le bas, ce qui ne présente pas de difficulté lorsque ces logements sont exécutés dans ladite paroi par carottage in situ, ce carottage pouvant être exécuté avec une très grande précision, quelle que soit l'inclinaison de la paroi. Le logement des fiches pourra en tout état de cause être chemisé par un tube d'acier.

Différents modes d'exécution de l'invention vont maintenant être décrits à titre d'exemples nullement limitatifs avec référence aux figures du dessin annexé dans lequel :
- la figure 1 est une vue en coupe verticale d'un dispositif de support conforme à l'invention, par l'axe du corps cylindrique de la fiche ;
- la figure 2 montre une fiche en béton à corps chemisé ;
- la figure 2a est une vue en coupe transversale du corps de cette fiche ;
- la figure 3 montre une fiche en béton pourvue d'une armature métallique interne ;
- la figure 3a est une vue en coupe transversale du corps de cette fiche ; et
- la figure 4 montre en coupe axiale un logement chemisé dans une paroi.

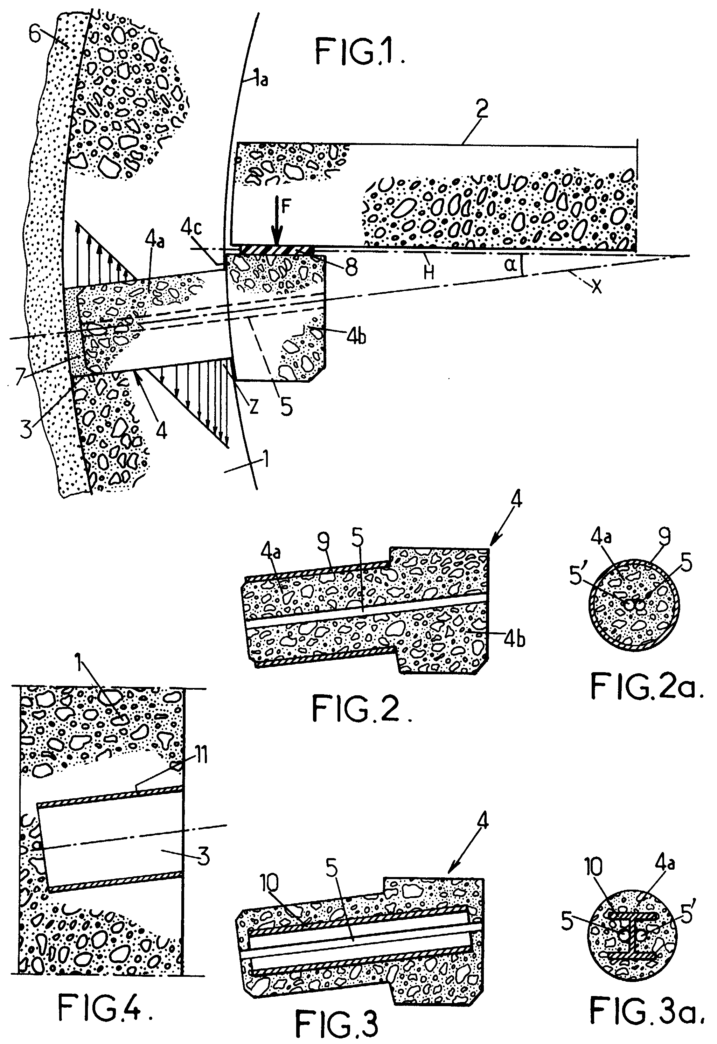

Sur la figure 1 la paroi en béton armé, par exemple un voussoir de tunnel routier, est référencée 1. Dans cette paroi 1 et par exemple in situ, c'est-à-dire dans le tunnel fini, que l'on souhaite équiper de planchers 2, on exécute par carottage à un diamètre précis, aux emplacements voulus, des logements cylindriques 3. L'axe X de ces logements est préférentiellement incliné (angle a) sur l'horizontale H, en étant orienté vers le bas de l'extérieur vers l'intérieur de la paroi 1.

Les fiches préfabriquées en béton de performance, référencées 4, comportent un corps cylindrique 4a propre à s'ajuster exactement dans le logement correspondant 3, et une tête 4b dont la surface d'épaulement 4c s'applique exactement sur la surface la de la paroi 1 lorsque leur corps est complètement engagé dans le logement 3.

Un passage d'évent 5 traverse de part en part les fiches 4, ce qui permet l'échappement de l'air comprimé entre l'extrémité du corps 4a des fiches et la roche 6.

Le scellement des fiches 4 sur la structure receveuse 1 peut être assuré par tout produit adapté aux sollicitations supportées et au jeu recherché de l'ajustage, et être constitué par exemple de ciment, de résines, de produits composites etc. Par exemple, l'enduction du corps 4a par une résine époxy permettra d'obtenir une "lubrification" lors de la mise en place, le réglage de l'ajustage et le scellement à terme de l'assemblage. Une couche de résine époxy peut également être prévue entre la surface d'épaulement 4c de la tête des fiches 4 et la surface la de la paroi.

Enfin, la mise en place définitive peut être complétée par une injection d'un produit 7 type résine à l'arrière du corps 4a en cas de besoin. Pour ce faire, on utilise un second passage traversant 5' tel que celui qui est visible sur la vue en coupe de la figure 2a, l'air pouvant encore s'échapper par le passage 5.

Lorsque ce scellement des fiches est terminé on exécute et on met en place le plancher 2, qui repose sur les tètes 4b des fiches 4 par l'intermédiaire de plaques de néoprène 8.

On a aussi représenté sur la figure 1 le diagramme des efforts exercés dans la paroi 1 par les fiches 4 sous la charge verticale F. On voit qu'il s'agit uniquement d'efforts de compression,ce qui constitue un important avantage: il n'y a pas de tractions dans la structure receveuse, ce qui est particulièrement intéressant dans le cas des matériaux dont la capacité de résistance en traction est médiocre en comparaison de la capacité de résistance en compression, tels que le béton. De plus, le fait que la face 4c de la fiche 4 soit rendue solidaire au contact de la structure receveuse 1 procure un "confinement" de la matière dans la zone référencée Z. Ce confinement tend à s'opposer aux effets d'écaillage de la peau que pourraient provoquer des contraintes de compression importantes, et améliore ainsi le fonctionnement de l'assemblage.

L'inclinaison des fiches sur l'horizontale présente l'avantage supplémentaire que toute amorce de mouvement éventuel soit un mouvement d'enfoncement vers la structure receveuse, et non l'inverse. Cette disposition permet de s'opposer à un éventuel cheminement arrière de la fiche, qui pourrait survenir lors de sa mise en place, ou ultérieurement, lorsque la fiche supportera ses sollicitations de service, ainsi que d'obtenir l'effet de "confinement" précité à l'interface entre la fiche 4 et la structure 1.

Comme déjà indiqué, le corps 4a des fiches 4 peut être chemisé par un tube d'acier, comme référencé en 9 aux figures 2 et 2a. Selon une autre variante, le corps des fiches 4 peut comporter une armature métallique interne, par exemple un profilé d'acier en I, comme référencé en 10 aux figures 3 et 3a.

A la figure 4 on a représenté une autre variante, selon laquelle le logement 3 est pourvu d'une chemise tubulaire en acier, référencée 11. Cette solution peut être adoptée notamment lors de l'élaboration préalable des logements 3 dans la structure receveuse 1, c'est-à-dire avant établissement du tunnel, dans la mesure où la précision obtenue est jugée suffisante.

Il va de soi que la présente invention pourra être mise en oeuvre sur toute autre structure receveuse qu'un tunnel, et de manière générale sur tout type de structure où il est difficile ou impossible de réaliser au départ les dispositifs de support nécessaires, comme cela est le cas notamment sur les parois moulées, les structures réalisées en coffrage glissant, etc.

## Revendications

1. Dispositif de support d'une structure (2) par une paroi de béton (1), caractérisé en ce qu'il comprend des fiches préfabriquées (4) comportant d'une part un corps (4a) engagé avec ajustement étroit dans un logement calibré (3) de forme complémentaire exécuté dans ladite paroi (1) à l'emplacement de fixation voulu, et d'autre part une tête (4b) propre à venir alors en saillie et en contact, substantiellement par toute sa surface (4c), sur la surface (la) de ladite paroi (1), cette tête (4b) servant d'appui à ladite structure (2).

2. Dispositif selon la revendication 1, caractérisé en ce que chaque fiche (4) est scellée dans son logement (3).

3. Dispositif selon la revendication 1 ou 2, caractérisé en ce que ledit corps (4a) des fiches (4) a une section droite constante.

4. Dispositif selon la revendication 3, caractérisé en ce que ledit corps (4a) des fiches (4) est cylindrique.

5. Dispositif selon l'une quelconque des revendications précédentes, caractérisé en ce que lesdites fiches (4) sont en béton armé.

6. Dispositif selon la revendication 5, caractérisé en ce que le corps (4a) des fiches (4) est chemisé par un tube d'acier (9).

7. Dispositif selon la revendication 5 ou 6, caractérisé en ce que lesdites fiches (4) comportent une armature interne (10) en acier.

8. Dispositif selon la revendication 3 ou 4, caractérisé en ce que lesdites fiches (4) sont réalisées par usinage d'acier moulé ou de fonte.

9. Dispositif selon l'une quelconque des revendications précédentes, caractérisé en ce que lesdites fiches (4) sont traversées sur toute leur longueur par au moins un passage d'évent (5).

10. Dispositif selon la revendication 9, caractérisé en ce que lesdites fiches (4) sont traversées sur toute leur longueur par au moins un passage (5') d'injection d'un produit de scellement (7) derrière l'extrémité de ce corps.

11. Dispositif selon l'une quelconque des revendications précédentes, caractérisé en ce que, de l'extérieur vers l'intérieur de ladite paroi (1), lesdits logements (3) des fiches sont inclinés vers le bas.

12. Dispositif selon l'une quelconque des revendications précédentes, caractérisé en ce que lesdits logements (3) sont exécutés dans ladite paroi (1) par carottage in situ.

13. Dispositif selon l'une quelconque des revendications précédentes, caractérisé en ce que lesdits logements (3) sont chemisés par un tube d'acier (11).
